(19) Europäisches Patentamt / European Patent Office / Office européen des brevets

(11) **EP 1 941 311 B1**

(12) **EUROPÄISCHE PATENTSCHRIFT**

(45) Veröffentlichungstag und Bekanntmachung des Hinweises auf die Patenterteilung:
**01.05.2013 Patentblatt 2013/18**

(21) Anmeldenummer: **06792091.8**

(22) Anmeldetag: **15.09.2006**

(51) Int Cl.:
**G02B 6/04** *(2006.01)*     **G02B 6/122** *(2006.01)*

(86) Internationale Anmeldenummer:
**PCT/EP2006/009010**

(87) Internationale Veröffentlichungsnummer:
**WO 2007/048468 (03.05.2007 Gazette 2007/18)**

(54) **METAMATERIAL MIT DER FÄHIGKEIT ZUR BREITBANDIGEN LINKSHÄNDIGEN LEITUNG ELEKTROMAGNETISCHER WELLEN**

METAMATERIAL HAVING THE CAPABILITY OF BROADBAND LEFT-HANDED GUIDANCE OF ELECTROMAGNETIC WAVES

MÉTAMATÉRIAU AYANT UNE CAPACITÉ DE CONDUCTION À GAUCHE ET DE LARGE BANDE D'ONDES ÉLECTROMAGNÉTIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.10.2005 DE 102005052208**

(43) Veröffentlichungstag der Anmeldung:
**09.07.2008 Patentblatt 2008/28**

(73) Patentinhaber: **Universität Stuttgart**
**70174 Stuttgart (DE)**

(72) Erfinder:
- **SCHWEIZER, Heinz**
  **70569 Stuttgart (DE)**
- **GRÄBELDINGER, Hedwig**
  **71729 Erdmannhausen (DE)**
- **BERROTH, Manfred**
  **71063 Sindelfingen (DE)**
- **GIESSEN, Harald**
  **67297 Marnheim (DE)**
- **RUMBERG, Axel**
  **76137 Karlsruhe (DE)**
- **FU, Liwei**
  **70176 Stuttgart (DE)**

(74) Vertreter: **Meier, Christof**
**Dreiss Patentanwälte**
**Postfach 10 37 62**
**70032 Stuttgart (DE)**

(56) Entgegenhaltungen:
**WO-A-2006/023915     US-A1- 2006 024 395**

- **URATA J ET AL: "Superradiant Smith-Purcell emission" PHYSICAL REVIEW LETTERS, NEW YORK,NY, US, Bd. 80, Nr. 3, 19. Januar 1998 (1998-01-19), Seiten 516-519, XP002277686 ISSN: 0031-9007**
- **SHELBY R A, ET AL.: "Experimental verification of a negative index of refraction", SCIENCE, vol. 292, no. 5514, 6 April 2001 (2001-04-06), pages 77-79, DOI: 10.1126/science.1058847**
- **CHEN HONGSHENG ET AL: "Metamaterial exhibiting left-handed properties over multiple frequency bands", JOURNAL OF APPLIED PHYSICS, AMERICAN INSTITUTE OF PHYSICS. NEW YORK, US, vol. 96, no. 9, 1 January 2004 (2004-01-01), pages 5338-5340, XP012069174, ISSN: 0021-8979, DOI: DOI:10.1063/1.1803942**
- **HONGSHENG CHEN ET AL.: "Left-handed materials composed of only S-shaped resonators", PHYSICAL REVIEW E, vol. 70, no. 5, 30 November 2004 (2004-11-30), pages 057605-1-057605-4, DOI: 10.1103/PhysRevE. 70.057605**

**Beschreibung**

Die Erfindung betrifft ein Metamaterial nach dem Oberbegriff des Anspruchs 1. Die Erfindung betrifft ferner eine Verwendung eines Metamaterials nach dem Oberbegriff des Anspruchs 9 sowie ein Verfahren zu seiner Herstellung, also ein Verfahren nach dem Oberbegriff des Anspruchs 10.

Ein solches Metamaterial ist aus der Veröffentlichung "Metamaterial exhibiting left-handed properties over multiple frequency bands" von Chen et al, Journal of Applied Physics, Volume 96, bekannt. Darüber hinaus ist ein solches Metamaterial auch aus der Veröffentlichung "Experimental verification of a negative index of refraction" von Shelby et al, Science, Band 292, Nr. 5514, 6. April 2001, Seiten 77 bis 79, bekannt.

In der Elektrodynamik wird unter einem Metamaterial ein Verbundmaterial verstanden, dessen elektromagnetische Eigenschaften nicht nur von den am Verbund beteiligten Stoffen, sondern insbesondere auch von der Struktur des Verbundes geprägt werden. Der Begriff wird insbesondere dann benutzt, wenn das Verbundmaterial Eigenschaften aufweist, die von natürlich gebildeten Materialien nicht bekannt sind. Ein Beispiel einer solchen Eigenschaft ist die sogenannte Linkshändigkeit bei der Leitung elektromagnetischer Wellen.

Bei der Ausbreitung solcher Wellen in natürlich gebildeten Materialien wie Luft und im Vakuum bilden die Vektoren der elektrischen Feldstärke, der magnetischen Feldstärke und der Propagationsrichtung ein rechtshändiges System. Mit anderen Worten: Liegt die elektrische Feldstärke in der x-Richtung und die magnetische Feldstärke in der y-Richtung eines kartesischen Koordinatensystems, so schreitet die Welle in Richtung der positiven z-Achse fort. Die Richtung des Wellenzahlvektors stimmt mit der Richtung des Energietransports durch die Welle, also mit der Richtung ihres Poynting-Vektors, überein.

Bilden die drei Vektoren dagegen ein linkshändige System, schreitet die Welle bei gleicher Orientierung von elektrischer und magnetischer Feldstärke in Richtung der negativen z-Achse fort, während der Energietransport weiter in Richtung der positiven z-Achse erfolgt. Wellenzahlvektor und Poynting-Vektor sind also antiparallel zueinander ausgerichtet. Wie aus Veröffentlichungen von Veselago aus den 60er Jahren des vorigen Jahrhunderts bekannt ist, tritt diese Linkshändigkeit dann auf, wenn sowohl die Permeabilität $\mu$ als auch die Permittivität $\varepsilon$ eines Materials negativ sind.

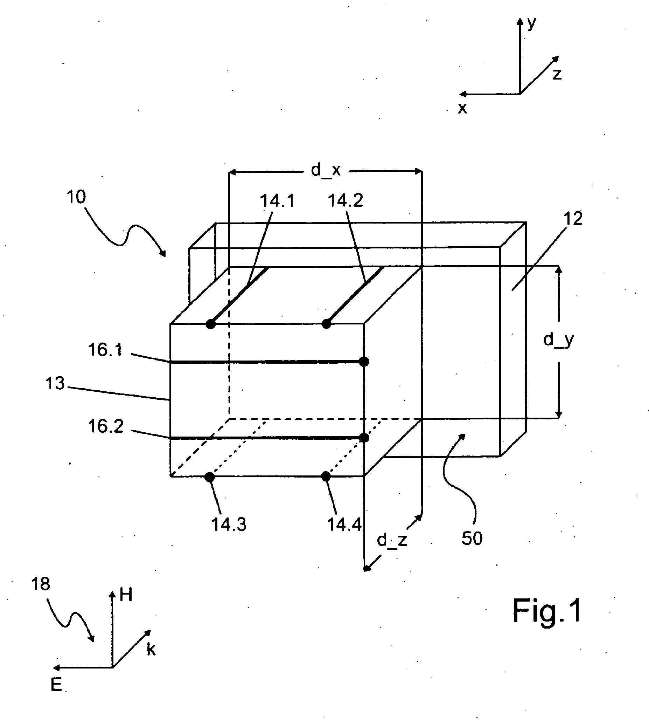

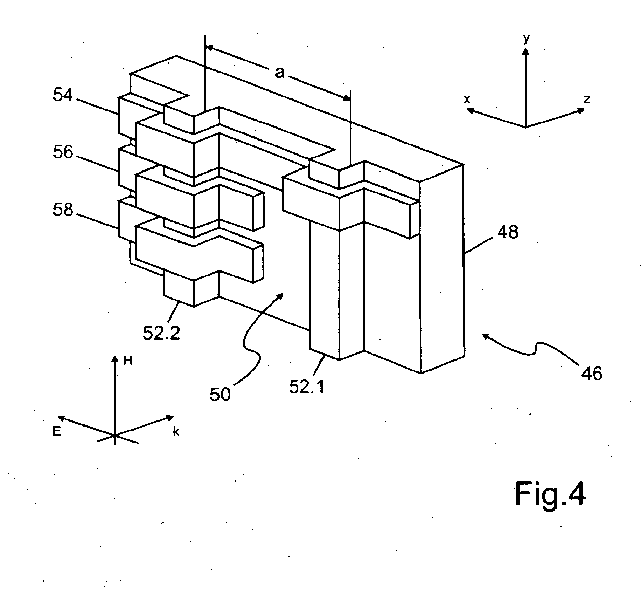

Eine Einheitszelle des aus der angegebenen Veröffentlichung von Chen et al bekannten Metamaterials, besteht im Prinzip aus einem planaren dielektrischen Träger, der beidseitig mit je einer flächigen, meanderförmigen Metallstruktur bedruckt ist (Vergleiche Chen et al, Fig. 1). Nach Chen et al entspricht dies einer erweiterten S-Geometrie anderweitig bekannter Split-Ring Resonatoren. Jede der beiden Metallstrukturen weist vier U-förmige Teile auf. Relativ zueinander sind beide Metallstrukturen spiegelbildlich so angeordnet, dass eine Basislinie eines U-förmigen Teils auf einer Seite des Dielektrikums über einer Öffnung eines U-förmigen Teils auf der anderen Seite des Dielektrikums liegt. Die U-förmigen Teile bilden daher jeweils Teile eines Rings, der über das Dielektrikum kapazitiv geschlossen wird. Als Folge erlauben Verschiebeströme in den Kapazitäten zwischen den horizontalen Metallmeandern bei Anlegen eines Magnetfeldes eine Induktion von Ringströmen in den Ringen, wobei die Induktivität jeweils proportional zur Ringfläche ist (Vergleiche Chen et al, Fig. 4).

Diese Einheitszelle weist daher vier in einer Reihe liegende Ringflächen auf, die nach einer willkürlichen Festlegung in z-Richtung übereinander liegen. Durch in x-Richtung erfolgende Hintereinanderanordnung von zum Beispiel zehn solcher Metallstrukturen auf einer dielektrischen Platte und Zusammenpressen von zum Beispiel sechzig solcher Platten, die in y-Richtung nebeneinander angeordnet und jeweils paarweise durch eine weitere, nicht bedruckte dielektrische Platte.getrennt sind, wird ein dreidimensionales Metamaterial erzeugt, das für mehr als zwei Frequenzen linkshändige Bandpass-Eigenschaften (more than two left-handed passbands) aufweisen soll. Dabei wird von einer Beleuchtung mit einer elektromagnetischen Welle ausgegangen, die in x-Richtung fortschreitet und deren elektrische Feldstärke in z-Richtung polarisiert ist.

Die Strukturbreiten der von Chen et al vorgestellten Einheitszelle liegen in der Größenordnung einiger Millimeter, was eine Wechselwirkung mit elektromagnetischen Wellen mit Wellenlängen im Millimeter- und Zentimeterbereich erwarten lässt. Diesen Erwartungen entsprechend liegen die in der Veröffentlichung offenbarten Bandpassfrequenzen in der Größenordnung von 10 GHz.

In der Summe wird daher durch Chen et al ein Metamaterial für den Gigahertzbereich vorgestellt, das ein planares dielektrisches Trägermaterial, erste elektrisch leitfähige Abschnitte in Form der U-Schenkel und zweite elektrisch leitfähige Abschnitte in Form der U-Basislinien aufweist.

Chen et al betreiben die Meander als Oszillatoren, was eine schmale Bandbreite für eine linkshändige Wellenausbreitung impliziert.

Ferner ist aus der Veröffentlichung "Transmission Line Approach of Left-Handed (LH) Materials and Microstrip Implementation of an Artificial LH Transmission Line" von Caloz et al, IEEE Transactions on Antennas and Propagation, Vol. 52, No. 5, eine planare Realisierung einer künstlichen transmission line mit Hilfe von Mikrostreifenleitungen bekannt, die für Mikrowellen, also für den Gigahertz-Bereich, linkshändige Eigenschaften aufweist. Nach Angaben der Autoren basiert dieser Ansatz auf nicht-resonanten Komponenten und besitzt deshalb breitbandige Eigenschaften.

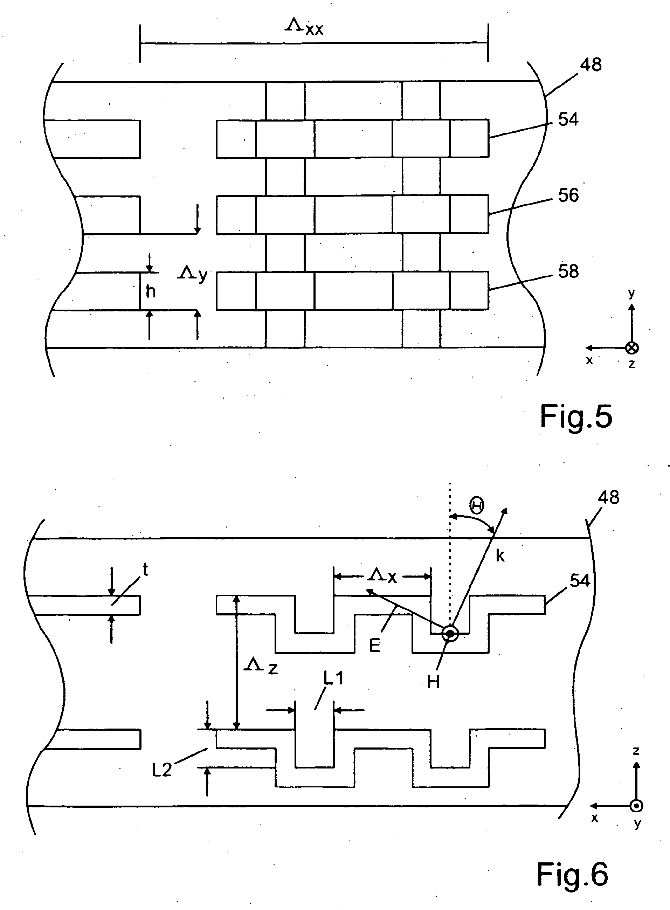

Aus der Veröffentlichung "Magnetism from Conductors and Enhanced Nonlinear Phenomena", von Pendry et al, IEEE Transactions on Microwave Theory and Techniques, Vol. 47, No. 11, November 1999 sind dreidimensionale Mikrostrukturen bekannten, die aus nicht-magnetischen, leitfähigen Schichten aufgebaut sind und mit denen sich in der Nähe von Resonanzen negative Werte einer magnetischen Permeabilität erzielen lassen (vergleiche dort Fig. 5). Eine negative elektrische Permittivität wird bei Pendry et al durch einen Verweis auf eine andere Druckschrift Veröffentlichung erwähnt, aber nicht mit der dreidimensionalen Mikrostruktur mit der negativen Permeabilität in Verbindung gebracht.

Neben den beiden erstgenannten Veröffentlichungen, die beide planare Strukturen elektrodynamisch linkshändiger Metamaterialien für den Gigahertz-Bereich vorstellen, sind aus der Veröffentlichung "Magnetic Response of Metamaterials at 100 Terahertz", von Linden et al, Science, Vol. 306, Seiten 1351 - 1353, ferner planare, periodische Anordnungen einzelner, nicht-magnetischer, metallischer Split-Ring Resonatoren bekannt. Jeder Resonator besteht aus einem Quadrat mit einer Seitenlänge von 320 nm aus 90 nm breitem und 20 nm dickem Gold, das einen quadratischen Bereich von 140 nm Seitenlänge an drei Seiten begrenzt. Die Begrenzung der vierten Seite weist einen Schlitz mit einer Schlitzbreite von 70 nm auf. Die Autoren ordnen dieser Struktur einen LC-Schwingkreis als Ersatzschaltbild zu, wobei die Ränder des Schlitzes einen Kondensator und der übrige Ring eine Spule (mit einer Windung) bilden.

Einfallendes Licht wechselwirkt mit dieser Struktur dann, wenn seine elektrische Feldstärke eine Komponente hat, die senkrecht zu den Flächen des Kondensators steht und/oder wenn seine magnetische Feldstärke eine zur Spulenfläche senkrechte Komponente besitzt. Der dann in dem über den Verschiebestrom des Kondensators geschlossenen Ring induzierte Ringstrom erzeugt nach der Lenz'schen Regel ein Magnetfeld, dessen Feldstärke sich entgegen der magnetischen Feldstärke des einfallenden Lichtes ausrichtet, was zu einer negativen Permeabilität $\mu$ führen kann.

Nach dieser Veröffentlichung besteht ein Bedarf für Metamaterialen, die im optischen Bereich wirksam sind. Linden et al selbst geben mit ihren LC-Schwingkreisen resonante Strukturen an, die bei Wellenlängen von 3 $\mu m$, also bei Frequenzen von 100 Terahertz, entweder eine negative Permittivität $\varepsilon$ oder eine negative Permeabilität $\mu$ zeigen. Welche dieser beiden Größen negativ wird, hängt von der Orientierung der Resonatoren in Bezug zur einfallenden Welle ab.

Die eingangs genannte Veröffentlichung "Experimental verification of a negative index of refraction" zeigt ein Beispiel eines linkshändigen Metamaterials, das aus quadratischen Kupfer-split-ring-Resonatoren und Kupferleitungsstreifen auf planaren fiber glass boards besteht und damit aus diskreten Streuelementen aufgebaut ist. Die split ring Resonatoren und die Kupferleitungstreifen befinden sich dabei auf gegenüber liegenden Flächen der fiber glass boards boards. Bei der Herstellung eines solchen fiber glass boards werden die diskreten fiber glass boards geschnitten und zu einem ineinander verschachtelten Gitter zusammengesetzt. Zwischen den fiber glass boards der auf diese weise gebildeten Struktur befindet sich Luft.

Der angeführte Stand der Technik zeigt, dass es einen Bedarf für im Bereich optischer Frequenzen wirksame Metamaterialien gibt. Wenn sich die gewünschten Eigenschaften der bekannten Metamaterialien als Folge von Resonanzen ergeben, treten sie außerhalb einer gewissen Bandbreite der Resonanzen nicht auf. Das Auftreten der gewünschten Eigenschaften ist daher auf eine in der Regel vergleichsweise schmale Bandbreite begrenzt. Störend ist auch, dass der Einfallswinkelbereich für elektromagnetische Wellen, bei dem sich die neuen Eigenschaften zeigen, bei den resonanten Strukturen vergleichsweise klein sind.

Ausgehend von dem eingangs genannten Stand der Technik besteht die Aufgabe der Erfindung in der Angabe eines Metamaterials, das einen negativen Brechungsindex in einem breitbandigen optischen Spektralbereich (z.B. um 100 THz-Bereich) auch bei großen Einfallswinkeln der optischen Strahlung besitzt und in einer Materialstruktur vorliegt, die eine einfache Realisierung von optischen Elementen wie Spiegel, Linsen, Wellenleiter, Koppler, Resonatoren und Modulatoren erlaubt. Darüber hinaus soll das Metamaterial einfach und zuverlässig herstellbar sein und seine Struktur soll, mit anderen Strukturparametern, auch für andere Frequenzbereiche, zum Beispiel für den Gigahertzbereich, verwendbar sein. Eine weitere Aufgabe besteht in der Angabe eines optischen Elements sowie eines Verfahrens zur Herstellung des Metamaterials und einer besondere Vorteile entfaltenden Verwendung des Metamaterials.

Diese Aufgabe wird bei einem Metamaterial der eingangs genannten Art durch die kennzeichnenden Merkmale des Anspruchs 1 gelöst. Mit Bezug auf die Verwendung wird die Aufgabe durch die Merkmale des Anspruchs 10 gelöst. Mit Blick auf das Herstellungsverfahren wird die Aufgabe durch die Merkmale des Anspruchs 11 gelöst.

Vorteile

Bei den aus dem Stand der Technik nach Chen bekannten Stapeln aus flächigen Anordnungen ist die Dicke der leitfähigen ersten und zweiten Abschnitte aus technologischen Gründen beschränkt. Freiheitsgrade für die Abmessungen elektrisch verbundener Abschnitte existieren daher nur in den beiden Dimensionen der Fläche. In der Fläche müssen die ersten und die zweiten Abschnitte so angeordnet werden, dass sie einen Winkel bilden. Da die Winkel auf flächigen Dielektrika aufliegen, wird der Bereich zwischen den Schenkeln der Winkel in der dritten Dimension, also in Richtung einer Flächennormalen, nicht durch dielektrisches Material abgestützt. Beim Zusammenpressen mehrerer mit den ersten und den zweiten Abschnitten versehener dielektrischer Platten kann es daher zu mechanischen Spannungen und Störungen der Struktur kommen, die eine Funktion als Metamaterial beeinträchtigen. Dies gilt um so mehr, je kleiner die Strukturbreiten der Anordnung aus ersten und zweiten Abschnitten sind. Dadurch, dass das dielektrische Trägermaterial des erfindungsgemäßen Metamaterials als aus einem Stück bestehendes Volumen realisiert ist, das wenigstens eine innere Fläche aufweist, die durch positive oder negative Rippen- oder Mesa-Strukturen im dielektrischen Trägermaterial vorstrukturiert ist, treten diese Nachteile nicht auf. Die Vorstrukturierung erlaubt eine Einbettung der ersten und der zweiten Abschnitte in allen drei Dimensionen, so dass eine optimale Abstützung der ersten Abschnitte und der zweiten Abschnitte durch das dielektrische Material erzielt wird. Dies erlaubt eine Verringerung der Strukturbreiten bis hinunter zu optisch wirksamen Dimensionen.

Die nicht planare Vorstrukturierung ist durch Lithografie und Ätzschritte mit der erforderlichen Genauigkeit durchführbar. Abmessungen, die bei den bekannten Strukturen auf einer planaren Oberfläche realisiert werden, lassen sich bei der hier vorgestellten Struktur durch die nicht planare Vorstrukturierung in der Tiefe des Dielektrikums und damit senkrecht zur. Oberfläche realisieren. Zusätzliches Ausdehnen der leitfähigen Abschnitte in der Richtung der Oberflächennormalen eröffnet einen zusätzlichen Freiheitsgrad für ein Maßschneidern der induktiven und kapazitiven Eigenschaften über entsprechende Gestaltungen der leitfähigen Abschnitte. Damit besteht zum Beispiel die Möglichkeit eines anwendungsorientierten Einstellens einer Brechzahl des Metamaterials. Mit einem solchen Metamaterial lassen sich zum Beispiel optische Elemente wie Linsen oder Wellenleiter mit negativen Brechzahlen herstellen. Die Materialstruktur ist so gestaltet, dass auch noch zusätzlich längere Wellenlängen außerhalb des Spektralbereichs sichtbaren Lichts bis hin zu mm- und cm- Wellen abgedeckt werden können, wenn die Längenparameter entsprechend angepasst werden.

Ein weiteres Merkmal des erfindungsgemäßen Metamaterials besteht darin, dass die ersten Abschnitte und die zweiten Abschnitte so angeordnet sind, dass die ersten Abschnitte bei einer Beleuchtung mit einer elektromagnetischen Welle bestimmter Ausbreitungsrichtung und Polarisation kapazitive Serienimpedanzen bilden, während die zweiten Abschnitte so angeordnet sind, dass sie bei der Beleuchtung induktive Nebenschlussimpedanzen bilden. Durch diese Anordnung wird das Prinzip des äquivalenten Schaltkreises auf optische Strukturen übertragen. Ein gleichzeitiges Auftreten von negativen Werten der Permittivität $\varepsilon$ und der Permeabilität $\mu$, wie es für eine Linkshändigkeit erforderlich ist, ist dann nicht mehr auf eine schmale Resonanzfrequenzbandbreite beschränkt. Als vorteilhafte Folge ergibt sich zum Beispiel eine Linkshändigkeit über einen breiten Frequenzbereich.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1   eine Mikrozelle eines Ausführungsbeispiels eines erfindungsgemäßen Metamaterials, das ein dielektrisches Trägermaterial sowie erste und zweite elektrisch leitfähige Abschnitte aufweist;

Fig. 2   Zuordnungen von optischen Gittern und ihren äquivalenten elektrischen Schaltkreisen;

Fig. 3   Ausgestaltungen von Abwandlungen des Metamaterials;

Fig. 4   eine Teilebene einer bevorzugten Ausgestaltung eines Metamaterials in einer Zwischenstufe eines Herstellungsverfahrens;

Fig. 5   eine Vorderansicht der Struktur aus der Fig. 4;

Fig. 6   eine Draufsicht auf die Struktur aus der Fig. 4 in Verbindung mit einer möglichen Orientierung einer elektromagnetischen Welle; und

Fig. 7   eine Ausgestaltung einer Mesa-Meanderstruktur.

Im Einzelnen zeigt Fig. 1 eine perspektivische Ansicht einer Elementarzelle oder Mikrozelle 10 eines erfindungsgemäßen Metamaterials in einem Zwischenstadium seiner Herstellung, das ein dielektrisches Trägermaterial 12 sowie erste elektrisch leitfähige Abschnitte 14.1, 14.2, 14.3, 14.4 und zweite elektrisch leitfähige Abschnitte 16.1, 16.2 aufweist. Die ersten Abschnitte und die zweiten Abschnitte können, wie dargestellt, galvanisch voneinander getrennt verlaufen oder auch miteinander verbunden sein. Sie können ferner linienförmig oder flächig ausgestaltet sein.

Das dielektrische Trägermaterial 12 weist eine innere Fläche 50 auf, die durch positive oder negative Rippen- oder Mesa-Strukturen 13 im dielektrischen Trägermaterial 12 vorstrukturiert ist und mit den ersten Abschnitten 14.1, 14.2, 14.3, 14.4 und den zweiten Abschnitten 16.1, 16.2 so belegt ist, dass die ersten Abschnitte 14.1, 14.2, 14.3, 14.4 bei einer Beleuchtung mit einer elektromagnetischen Welle 18 bestimmter Ausbreitungsrichtung k und Polarisation E kapazitive Serienimpedanzen bilden, während die zweiten Abschnitte 16.1, 16.2 so angeordnet sind, dass sie bei der Beleuchtung induktive Nebenschlussimpedanzen bilden. Wie weiter unten noch näher ausgeführt wird, ergibt sich die Bildung der genannten Impedanzen nach dem Prinzip des äquivalenten Schaltkreises optischer Strukturen, bei dem den optischen Strukturen elektrische Ersatzschaltbilder zugeordnet werden.

Die Form der Mesastrukturen 13 ist nicht auf die dargestellte kubische Form beschränkt sondern kann in jeder Form realisiert werden, die bei einer Belegung mit ersten und zweiten Abschnitten die gewünschten Impedanzen ergibt. Wesentlich ist dabei in jedem Fall, dass sich bevorzugt kapazitive Serienschlussimpedanzen und induktive Nebenschlussimpedanzen bilden, da diese die linkshändige Wellenausbreitung unterstützen. Kapazitive Nebenschlussimpedanzen und induktive Serienimpedanzen unterstützen dagegen eine rechtshändige Wellenausbreitung und sollen dagegen nach Möglichkeit nicht oder nur in vergleichsweise geringerem Ausmaß gebildet werden.

Die Abmessungen der Mesastruktur 13 der Fig. 1 aus dielektrischem Material weist charakteristische Längen von $d\_x$, $d\_y$, $d\_z$ auf, die jeweils gleich oder auch verschieden sein können. Um ein optisch glattes Metamaterial zu ergeben, sollten diese Längen jedoch jeweils kleiner als ¼ der (Arbeits-)Wellenlänge sein, die sich linkshändig durch das Metamaterial ausbreiten soll. Werte zwischen 1/5 und 1/100 der Arbeitswellenlänge werden für optische Anwendungen bevorzugt. Ein Abbild größerer Metamaterialvolumina entsteht aus der Mikrozelle 10 durch periodische Fortsetzung längs der angegebenen Raumrichtungen x, y und z, wobei Zwischenräume jeweils durch dielektrisches Material zu füllen sind. Nach dem Füllen ist das dielektrische Trägermaterial 12 entsprechend als aus einem Stück bestehendes Volumen realisiert, in das die ersten Abschnitte 14.1, 14.2, 14.3, 14.4 und die zweiten Abschnitte 16.1, 16.2 eingebettet sind.

Die ersten Abschnitte 14.1, 14.2 und 14.3, 14.4 liegen jeweils paarweise in einer zur x, z - Ebene parallelen Ebene. Die jeweils in einer solchen Ebene liegenden ersten Abschnitte bilden erste Gitter. Entsprechend liegen die zweiten Abschnitte 16.1, 16.2 jeweils paarweise in einer zur x, y - Ebene parallelen Ebene. Die jeweils in einer solchen Ebene liegenden zweiten Abschnitte bilden zweite Gitter.

Bei einer Beleuchtung eines solche Gitter aufweisenden Metamaterials mit einer elektromagnetischen Welle 18, die sich in Richtung des dargestellten Propagationsvektors k ausbreitet, und deren elektrische Feldstärke E zusammen mit ihrer magnetischen Feldstärke H und dem Propagationsvektor k ein rechtshändiges System mit der dargestellten Polarisation von E darstellt, kann man den Gittern nach dem Prinzip des äquivalenten Schaltkreises optischer Strukturen elektrische Ersatzschaltbilder zuordnen. Das genannte Prinzip wird in allgemeiner Form in dem Waveguide Handbook von N. Marcuvitz, M.I.T. Rad. Lab. Ser., Mc Graw-Hill, oder auch von R. Ulrich, Infrared Physics 7, 37, (1967) beschrieben.

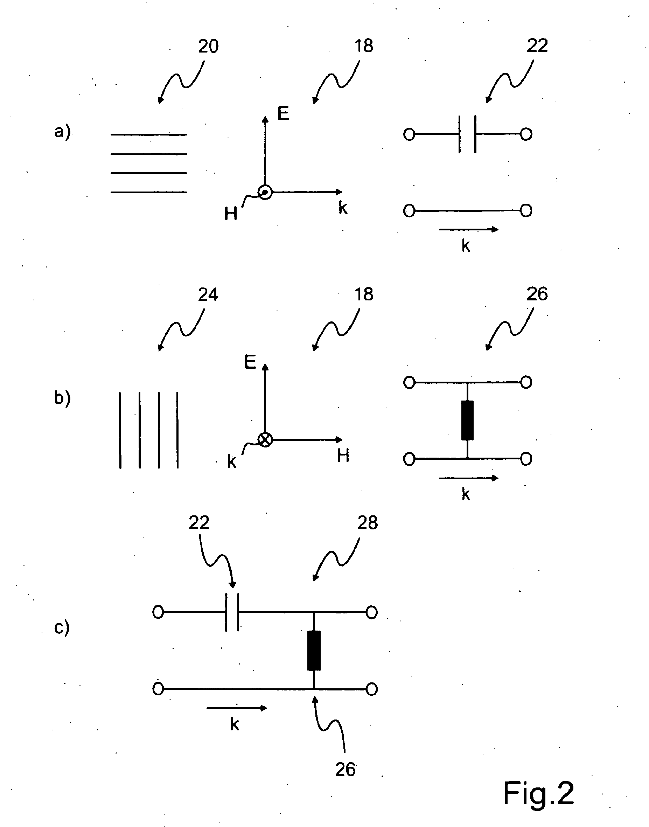

Fig. 2 fasst die für den Gegenstand der Fig. 1 relevanten Zuordnungen von mit ebenen elektromagnetischen Wellen (E, H, k) 18 wechselwirkenden Gittern und ihren äquivalenten elektrischen Schaltkreisen zusammen.

Dabei zeigt die Fig. 2 a ein Gitter 20, das auf die dargestellte elektromagnetische Welle 18 bei einer elektrischen Betrachtung wie eine in Propagationsrichtung k der Welle 18 liegende und damit wie eine longitudinal wirkende Kapazität 22 reagiert. Die relative Orientierung von Gitter 20 und Welle 18 in der Fig. 2 a entspricht jeweils der Orientierung von erstem Gitter 14.1, 14.2 und Welle 18 in der Fig. 1. Das erste Gitter 14.1, 14.2 in der Fig. 1 wirkt entsprechend wie eine kapazitive Serienschlussimpedanz 22.

Analog zeigt die Fig. 2 b ein Gitter 24, das auf die dargestellte elektromagnetische Welle 18 bei einer elektrischen Betrachtung wie eine quer zur Propagationsrichtung k, also eine lateral wirkende Induktivität 26 reagiert. Die relative Orientierung von Gitter 24 und Welle 18 in der Fig. 2 b entspricht jeweils der Orientierung von zweitem Gitter 16.1, 16.2 und Welle 18 in der Fig. 1. Das zweite Gitter 16.1, 16.2 in der Fig. 1 wirkt entsprechend wie eine induktive Nebenschlussimpedanz 26.

Im Ergebnis ergibt sich für ein aus Mikrozellen 10 zusammengesetztes Metamaterial ein äquivalenter elektrischer Schaltkreis 28 als Reihenschaltung einer Serienschlusskapazität 22 und einer Nebenschlussinduktivität 26, wie er in der Fig. 2 c dargestellt ist. Durch einen solchen elektrischen Schaltkreis lässt sich auch das elektrische Verhalten von Transmissionsleitungen beschreiben, so dass das Verhalten des Metamaterials insofern mit dem gleichen Modell beschrieben werden kann.

Eine bevorzugte Ausgestaltung eines Metamaterials zeichnet sich daher dadurch aus, dass die ersten Abschnitte und die zweiten Abschnitte so angeordnet sind, dass die ersten Abschnitte bei einer Beleuchtung mit einer elektromagnetischen Welle bestimmter Ausbreitungsrichtung und Polarisation kapazitive Serienimpedanzen bilden, während die zweiten Abschnitte so angeordnet sind, dass sie bei der Beleuchtung induktive Nebenschlussimpedanzen bilden.

Diese Ausgestaltung basiert auf einer Übertragung des Prinzips des äquivalenten Schaltkreises auf optische Strukturen. Ein Auftreten von negativen Werten der Permittivität $\varepsilon$ und der Permeabilität $\mu$, wie es für eine Linkshändigkeit erforderlich ist, ist dann nicht mehr auf eine schmale Resonanzfrequenzbandbreite beschränkt. Als vorteilhafte Folge ergibt sich zum Beispiel eine Linkshändigkeit über einen breiten Frequenzbereich.

Bei einer Analyse eines solchen Metamaterials, das aus Mikrozellen mit einer charakteristischen Länge von $d_{\_zelle}$ aufgebaut ist, kann man eine Impedanz $Z'=Z/d_{\_zelle}$ als Serienimpedanz pro Längeneinheit der Leitung definieren. Dabei entspricht die Längeneinheit $d_{\_zelle}$ der charakteristischen Länge der Leitung, also der Mikrozelle, in Propagationsrichtung. Ferner lässt sich eine weitere Impedanz $Y'=Y/d_{\_zelle}$ als Nebenschlussimpedanz pro Länge der Leitung definieren.

Diese Impedanzen $Z'$ und $Y'$ hängen von der Permittivität E oder der Permeabilität $\mu$ nach den folgenden Zusammenhängen 1a, 1b ab, wobei $\omega$ die Kreisfrequenz der Welle 18 und j die imaginäre Einheit bezeichnet:

$$(1a) \qquad \frac{Z}{d_{\_Zelle}} = j \cdot \omega \cdot \mu$$

$$(1b) \qquad \frac{Y}{d_{\_Zelle}} = j \cdot \omega \cdot \varepsilon$$

Aus den Gleichungen 1a und 1b ergibt sich, dass negative Werte für die Permittivität $\varepsilon$ und die Permeabilität $\mu$ zur Realisierung eines Materials mit negativem Brechungsindex über eine serielle Kapazität C und einen induktiven Nebenschluss L zu erreichen ist, denn für solche Größen C und L gelten die folgenden Gleichungen 2a, 2b:

$$(2a) \qquad \frac{Z}{d_{\_Zelle}} = \frac{1}{j \cdot \omega \cdot C}$$

$$(2b) \qquad \frac{Y}{d_{\_Zelle}} = \frac{1}{j \cdot \omega \cdot L}$$

Aus 1a und 2a folgt insbesondere, dass die Permeabilität $\mu$ negativ ist und ihr Betrag vom Kehrwert der Kapazität C abhängt. Entsprechend ergibt sich aus 1b und 2 b insbesondere, dass die Permittivität $\varepsilon$ ebenfalls negativ ist und ihr Betrag vom Kehrwert der Induktivität L abhängt.

Mit Blick auf die Fig. 1 ergibt sich damit insbesondere, dass die ersten Abschnitte 14.1, 14.2, 14.3, 14.4 dem Metamaterial kapazitive Eigenschaften und die zweiten Abschnitte 16.1, 16.2 dem Metamaterial induktive Eigenschaften verleihen, wenn sie in der dargestellten Anordnung zum Propagationsvektor k angeordnet sind. Mit anderen Worten; Durch Anordnen der ersten Abschnitte parallel zum Propagationsvektor des Lichtes und der zweiten Abschnitte zueinander parallel in der Ebene senkrecht zum Propagationsvektor (E, H oder x, y - Ebene) können serielle Kapazitäten, d.h. kapazitive Serienschlussimpedanzen , und entsprechende induktive Nebenschlussimpedanzen aufgebaut werden.

Durch die Anwendung des Prinzips des äquivalenten Schaltkreises auf optische Strukturen wird mit metallischen oder zumindest leitfähigen U-Schleifen eine besonders einfache und kostengünstige Realisierung von kapazitiven Serienschlussimpedanzen und induktiven Nebenschlussimpedanzen erreicht.

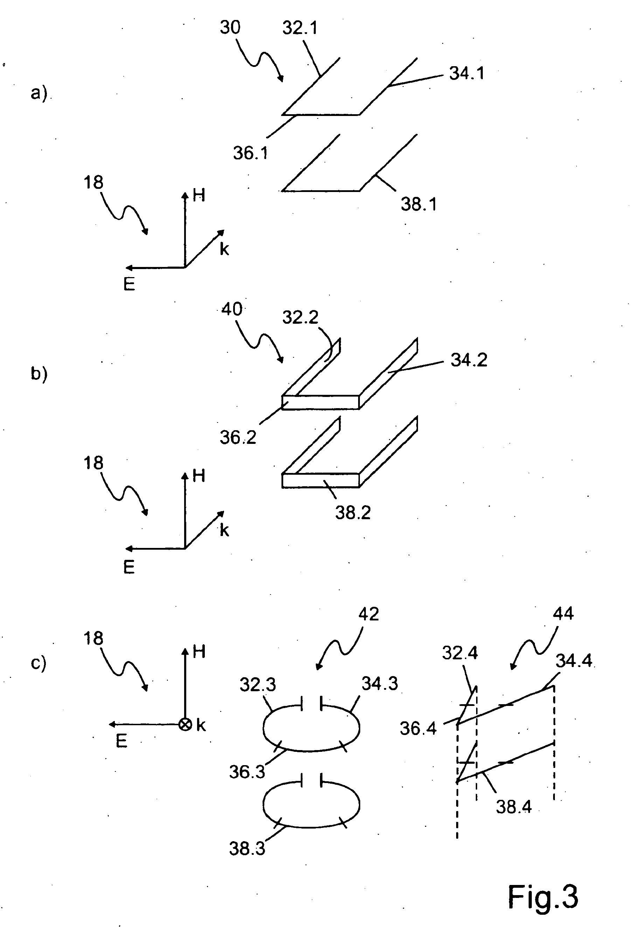

Dabei sind auch Abwandlungen der Gitter möglich. Fig. 3 zeigt einige Ausgestaltungen solcher Abwandlungen ohne dabei einen Anspruch auf Vollständigkeit zu erheben. Fig. 3 a zeigt linienhafte U-Strukturen 30, bei denen Schenkel 32.1, 34.1 für die Welle 18 ein erstes, kapazitives Gitter und Basislinien 36.1, 38.1 ein zweites, induktives Gitter bilden. Die Schenkel 32.1 und 34.1 entsprechen insofern den ersten Abschnitten 14.1 und 14.2 aus der Fig. 1, während die Basislinien 36.1 und 38.1 den zweiten Abschnitten 16.1 und 16.2 aus der Fig. 1 entsprechen.

Fig. 3b zeigt eine Ausgestaltung 40 mit flächenhaften U-Strukturen, bei denen Flächen oder Platten 32.2, 34.2 parallel zum Propagationsvektor k liegen und Basisflächen oder Platten 36.2, 38.2 senkrecht zu k liegen.

Mit beiden abgewandelten Strukturen 30 und 40 lässt sich ein Metamaterial realisieren, bei dem die parallel zum Propagationsvektor k angeordneten Platten und Drähte 32.i, 34.i mit i = 1 oder 2 die serielle Kapazität und die senkrecht zum Propagationsvektor k angeordneten Platten und Drähte 36.1, 38.i die Nebenschlussinduktivität erzeugen. Die offenen Strukturen bilden jeweils Leiterschleifen mit einer Öffnung, die parallel zur elektrischen Feldstärke liegt und damit über kapazitive Verschiebeströme geschlossen werden kann. Eine so geschlossene Leiterschleife stellt eine Induktivität dar, die mit der magnetischen Feldstärke H wechselwirkt.

Daraus ergibt sich, dass die Strukturen auch weiter abgewandelt werden können. Beispiele weiterer Abwandlungen sind in der Fig. 3 c in Form von offenen Kreisen 42 und offenen V-Strukturen 44 dargestellt, die gewissermaßen aus ersten Abschnitten 32.3, 34.3 und zweiten Abschnitten 36.3, 38.3 im Fall der Kreise 42 und ersten Abschnitten 32.4, 34.4 und zweiten Abschnitten 36.4, 38.4 im Fall der offenen V-Strukturen 44 aufgebaut sind. Die Fläche der Strukturen 42, 44 sollte wieder von H durchsetzt werden und ihre Öffnung sollte durch E überbrückt werden. Sämtliche in dieser Anmeldung vorgestellten Ausgestaltungen besitzen den Vorteil, dass der H-Vektor der einfallenden Welle über die zweiten Abschnitte im Idealfall vollständig in das Metamaterial eingekoppelt werden kann.

Fig. 4 zeigt eine Teilebene 46 einer bevorzugten Ausgestaltung eines Metamaterials in einer Zwischenstufe eines Herstellungsverfahrens in perspektivischer Ansicht.

Die Teilebene 46 weist eine Schicht aus dielektrischem Trägermaterial 48 auf, das für elektromagnetische Wellen durchlässig ist und eine möglichst niedrige Brechzahl besitzen soll. Für optische Metamaterialien kommt zum Beispiel $SiO_2$ oder $MgF_2$ als Trägermaterial 48 in Frage. Dies gilt auch für das weiter oben genannte dielektrische Trägermaterial 12. Im Rahmen anderer Ausgestaltungen kann das dielektrische $SiO_2$-Material aber auch durch das Dielektrikum eines E-Beam-Lackes oder eines optischen Lackes ersetzt werden. Eine Fläche 50 der Teilebene 46 wird zum Beispiel durch aus der Halbleiterherstellung bekannte Lithografie- und Ätzschritte so vorstrukturiert, dass sie positive oder negative Rippen- oder Mesa-Strukturen 52.1, 52.2 aufweist. Dabei werden Erhebungen über der Fläche 50 als positiv und Vertiefungen in der Fläche 50 als negativ verstanden. Sowohl bei den positiven als auch bei den negativen Strukturen können verschiedene Verhältnisse von Länge zu Breite von Nutzen sein.

Anschließend wird auf der vorstrukturierten Fläche 50 eine Struktur aus leitfähigem Material gebildet. Dies kann ebenfalls nach aus der Halbleitertechnik bekannten Metallisierungsverfahren geschehen. Als leitfähiges Material kommen die dort üblichen Metalle wie Au, Ag oder Al oder auch leitfähiges Halbleitermaterial wie hochdotiertes Polysilizium in Frage. Ferner können die ersten elektrisch leitfähigen Abschnitte 14.1, 14.2, 14.3, 14.4 und zweiten elektrisch leitfähige Abschnitte 16.1, 16.2 mittels eines galvanischen Verfahrens hergestellt werden. Durch eine Abscheidung von leitfähigem Material in Form von Meanderbändern 54, 56, 58 werden damit mehrere Meanderbänder 54, ... aus leitfähigem Material auf der Rippenstruktur oder Grabenstruktur parallel zueinander angeordnet.

Die Meanderbänder 56, 58 sind nicht vollständig dargestellt, um die Rippenstruktur der Fläche 50 des Trägermaterials 48 deutlicher hervortreten zu lassen. In der Realität verlaufen sie jedoch in der Regel durchgehend parallel zum Meanderband 54. Die parallele Anordnung mehrerer Meanderbänder 54, 56, 58, ... wird im Folgenden auch als Multimeanderstruktur bezeichnet. Alternativ zu einer Anordnung in Meanderbändern können die leitfähigen Materialien auch als Oszillatorstrukturen auf vorstrukturiertem Substrat 46 ausgestaltet sein. Wesentlich ist in jedem Fall, dass das Metamaterial Strukturen enthält, die eine linkshändige Wellenausbreitung stärker unterstützen als eine rechtshändige Wellenausbreitung.

Die nicht planare Vorstrukturierung ist durch Lithografie und Ätzschritte mit der erforderlichen Genauigkeit durchführbar. Abmessungen, die bei den bekannten Strukturen auf einer planaren Oberfläche realisiert werden, lassen sich bei der hier vorgestellten Struktur durch die nicht planare Vorstrukturierung in der Tiefe des Dielektrikums und damit senkrecht zur Oberfläche realisieren. Zusätzliches Ausdehnen der leitfähigen Abschnitte in der Richtung der Oberflächennormalen eröffnet einen zusätzlichen Freiheitsgrad für ein Maßschneidern der induktiven und kapazitiven Eigenschaften über entsprechende Gestaltungen der leitfähigen Abschnitte.

Bei der dargestellten Ausrichtung der Teilebene 46 zu der elektromagnetischen Welle (E, H, k) 18 bildet jedes Meanderband 54, 56, 58 eine Folge von U-Schleifen, deren Schenkel parallel zum Propagationsvektor k der Welle 18 orientiert sind und deren Basislinien in der Ebene zum Propagationsvektor k senkrechten Ebene, also in der E, H - Ebene oder der x, y - Ebene, parallel zueinander ausgerichtet sind. Die Schenkel bilden daher jeweils erste Abschnitte und die Basislinien bilden entsprechend zweite Abschnitte einer auf der Rippenstruktur oder auf der Grabenstruktur liegenden Struktur aus leitfähigem Material.

Wie weiter oben erläutert wurde, ergeben sich dadurch in Wechselwirkung mit der Welle 18 kapazitive Serienschlussimpedanzen und induktive Nebenschlussimpedanzen.

Die kapazitiv wirkenden ersten Abschnitte, die die optische Longitudinalkapazität der Struktur darstellen, werden bevorzugt so gewählt, dass sie im Vergleich mit den als induktiver Nebenschluss wirkenden zweiten Abschnitten einen ähnlichen oder gleichen Impedanzwert aufweisen.

In der dargestellten Orientierung liegt der longitudinal kapazitiv wirksame Bereich der U-Schleifen parallel zum Propagationsvektor k, während die von den U-Schenkeln und der U-Basislinie berandete Fläche der U-Schleife vom magnetischen Feldvektor H in senkrechter Richtung, also in y-Richtung, durchdrungen wird. Der elektrische Feldvektor liegt parallel zu den sich in der E, H - Ebene, beziehungsweise in der x, y - Ebene erstreckenden Meanderbändern 54, 56, 58.

Die seitliche Fläche des U der Metallmeanderstruktur in der H, k - Ebene, beziehungsweise in der y, z - Ebene, ist ein Maß für die kapazitive Serienschlussimpedanz der Meanderstruktur, und der Abstand der Bänder $\Lambda_Y$ in y-Richtung im Verhältnis zu ihrer Periode $\Lambda_{xx}$ in x-Richtung ist jeweils ein Maß/Parameter für die induktive Nebenschlussimpedanz.

Die Flächen der H, k - Ebene (y, z - Ebene) und der E, H - Ebene (x, y - Ebene) liegen zueinander senkrecht und können daher beim Entwurf der Struktur des Metamaterials in der Multimeanderstruktur so variiert werden, dass das Verhältnis von Permittivität $\varepsilon$ und Permeabilität $\mu$ durch das Design der Struktur einstellbar ist und insbesondere gleich Eins sein kann. Bei gleichzeitig negativen Werten der Permeabilität $\mu$ und der Permittivität $\varepsilon$ führt dies zu dem Wert -1 für die Brechzahl n. Damit können dann auch Strukturen aufgebaut werden, die frei von Rückreflexion sind, da der Vakuumwert der Brechzahl n = 1 beträgt.

Dabei kann die Optimierung der Serienkapazität durch einfache Erhöhung oder Verringerung der Rippentiefe in z-Richtung des Materials und die Optimierung der induktiven Nebenschlussimpedanz durch einfache Erhöhung / Verringerung der Breiten h der Meanderbänder in y-Richtung sowie durch Variation des Abstandes $\Lambda_y$ - h der Meanderbänder voneinander in y-Richtung durchgeführt werden. Ferner besteht die Möglichkeit, die Permittivität $\varepsilon$ und die Permeabilität $\mu$ im optischen Spektralbereich sowohl gemeinsam negativ als auch einzeln auf negative Werte einzustellen.

Dabei liefert die Ausdehnung der Strukturen 54, 56, 58, .... in y-Richtung einen zusätzlichen Freiheitsgrad für ein Maßschneidern der induktiven und kapazitiven Eigenschaften über entsprechende Gestaltungen der leitfähigen Abschnitte. Die einzelnen Einstellmöglichkeiten werden bereits bei der Betrachtung des folgenden einfachen Modells für eine kapazitive und induktive Einkopplung der einfallenden elektromagnetischen Welle über Kapazitäten und Induktivitäten des Metamaterials deutlich. Dabei versteht es sich, dass in der Realität frequenzabhängig weitere Effekte wie eine Anregung von Plasmonen auftreten, die auch eine komplexere Einkopplung der einfallenden elektromagnetischen Welle in das Metamaterial erlauben und zu Abweichungen von den folgenden rein klassischen Effekten führen.

Die Metallisierung in der Fig. 4 weist U-Strukturen mit einer Basis in x-Richtung und Schenkeln in z-Richtung auf. Die Strukturen besitzen eine Streifenhöhe in y Richtung. E liegt in x-Richtung, H in y-Richtung und k in z-Richtung. Das Produkt aus Streifenhöhe und Schenkellänge bestimmt die Fläche der Serienschlusskapazität C. Diese Fläche liegt in der y-z-Ebene. Das Produkt aus Schenkellänge und Basislänge bestimmt die Fläche, die zu H normal liegt und daher die Nebenschlussinduktivität L bestimmt. Diese Fläche liegt in der x-z-Ebene.

(1) Wenn man die Schenkellänge ( = Rippentiefe, z-Richtung)) ändert, ändert sich der beiden Flächen gemeinsame Parameter der z-Richtung. Eine Vergrößerung der Schenkellänge vergrößert beide Flächen und vergrößert daher C und L abhängig voneinander.

(2) Wenn man die Basislänge ( = Rippenbreite, x-Richtung) ändert, ändert sich nur die die L-Fläche. Die C-Fläche ändert sich zwar nicht, es ändert sich aber der Abstand der Kondensatorplatten. Eine Vergrößerung der Basislänge vergrößert daher L und verkleinert C abhängig voneinander.

(3) Wenn man die Streifenhöhe (y-Richtung) ändert, ändert man nur die C-Fläche, ohne die L-Fläche zu ändern. Eine Vergrößerung der Streifenhöhe vergrößert die C-Fläche und damit die Kapazität unabhängig von der Induktivität.

Die Erfindung besitzt mit den Möglichkeiten (1) und (2) sämtliche Möglichkeiten zur Einstellung der gewünschten kapazitiven und induktiven Eigenschaften, wie sie auch bei den planaren Strukturen bei Chen vorhanden sind. Die Möglichkeit (3) ist jedoch nur bei der Erfindung, nicht aber bei den planaren Strukturen (insbesondere Chen) gegeben und stellt einen wesentlichen Vorteil der Erfindung dar. Um die C-Fläche ohne eine Änderung der L-Fläche zu ändern, müssten bei Chen weitere Lagen der gedruckten Strukturen angefügt werden. Die L-Fläche wäre dann aber, anders als beim Gegenstand der Erfindung, kein galvanisch verbundenes Gebiet. Jede weitere Lage mit gedruckter Metallstruktur würde bei Chen effektiv eine weitere Spulenwicklung realisieren und damit eine Veränderung der Induktivität bewirken.

Fig. 5 zeigt eine Vorderansicht einer Struktur, wie sie aus der Teilebene 46 der Fig. 4 durch Fortsetzung längs der x-Richtung entsteht. Für optische Wellenlängen sind Werte der Breite h der Meanderstreifen in y-Richtung von 30 nm - 150 nm vorteilhaft. Die Breite h beeinflusst zusammen mit dem Abstand $\Lambda_Y$ der Meanderstreifen in Y-Richtung und der Periode $\Lambda_{xx}$ der Struktur in x-Richtung die induktive Nebenschlussimpedanz und damit den Wert der Permittivität $\varepsilon$ der Metamaterialstruktur. $\Lambda_{xx}$ kann wesentlich größer als die Bragg-Wellenlänge sein. $\Lambda_Y$ sollte kleiner als die Bragg-Wellenlänge $\lambda_{Bragg} = 2 \, n_{eff} \, A$ sein.

Zur Erzeugung eines Metamaterials werden Teilebenen 46 oder Schichten, wie sie in den Fig. 4 und 5 dargestellt sind, während des Herstellungsprozesses gestapelt. Dazu wird die Teilebene 46 mit der Metallisierung aus Meanderbändern 54, 56, 58, ... aus leitfähigem Material mit weiterem dielektrischen Trägermaterial bedeckt und anschließend planarisiert. $SiO_2$-Schichten können zum Beispiel mit chemischen Methoden aus der Gasphase abgeschieden werden. Durch das Bedecken der Metallisierung wird diese insgesamt in das dielektrische Trägermaterial eingebettet.

Die Teilebene mit eingebetteter Metallisierung wird dann planarisiert. Anschließend wird das planarisierte Trägermaterial als vorzustrukturierende Schicht zur Erzeugung einer zweiten Metallisierungslage verwendet. Die nach der Vorstrukturierung aufgebrachte Metallisierung wird wieder in weiteres dielektrisches Trägermaterial eingebettet. Diese Schritte werden für eine Herstellung eines Metamaterials mit einer Mehrzahl von Lagen der leitfähigen Streifen mehrmals wiederholt, wobei jeweils planarisiertes Metamaterial mit einem n Lagen leitfähiger Meanderbänder und damit n Teilebenen aufweisenden Schichtstapel als vorzustrukturierende Schicht zur Erzeugung eines Schichtstapels mit n + 1 Teilebenen verwendet wird.

Dabei kann die Zahl der Teilebenen 46 prinzipiell beliebig hoch sein. Da die Bandbreite des Metamaterials mit der Zahl der Teilebenen zunimmt, kann sie durch Festlegen dieser Zahl bei der Herstellung eingestellt werden.

Ein solches gestapeltes Metamaterial, dessen Teilebenen durch Anwendung der Regeln des äquivalenten Schaltkreises auf optische Strukturen entworfen worden sind, stellt eine nahezu ideale kapazitive Serienschlussimpedanz und eine nahezu ideale induktive Nebenschlussimpedanz bereit.

Fig. 6 zeigt eine Draufsicht auf die Struktur aus der Fig. 4. nach einer Herstellung und Einbettung einer zweiten Metallisierungslage sowie einer anschließenden Planarisierung dar. Die Werte typischer Strukturparameter für optische Wellenlängen sind wie folgt:

| | |
|---|---|
| t = 10 nm - 40 nm; L1 = 50 nm - 400 nm, | dieser Wert ergibt sich aus der gewünschten Betriebswellenlänge); |
| L2 = 30 nm - 150 nm | dieser Wert bestimmt die serielle Impedanz des Metamaterials und ergibt sich ebenfalls aus |
| | der gewünschten Betriebswellenlänge. |

$\Lambda_x$ und $\Lambda_z$ sollen kleiner als die Bragg-Wellenlänge $\lambda_{Bragg}$ = 2 $n_{eff}$ $\Lambda$ sein und stellen gleichzeitig die Mikrozellengröße des Metamaterials in der x, z - Ebene dar. Analog sollen $\Lambda_X$ und $\Lambda_Y$, also die Werte der Mikrozellengröße des Metamaterials in der x, y - Ebene, kleiner als die Bragg-Wellenlänge $A_{Bragg}$ = 2 $n_{eff}$ A sein.

Um ein optisch weitgehend glattes Metamaterial zu realisieren, bei dem Interferenzen, die von der Wechselwirkung der ersten und zweiten Abschnitte mit der Welle hervorgerufen werden, noch vernachlässigbar sind, sollten diese Größen $\Lambda_x$ und $\Lambda_z$ kleiner als ein Viertel der Arbeitswellenlänge sein. Für optische Anwendungen werden Werte zwischen 1/100 und 1/5 der Arbeitswellenlänge bevorzugt.

Als allgemeine Dimensionierungsregel soll der Abstand zwischen Rippen- oder Mesa-Strukturen einer Lage zwischen 1/10 und 1/5 der Arbeitswellenlänge, also der Wellenlänge der elektromagnetischen Strahlung sein, für die das Material benutzt werden soll. Für den optischen Spektralbereich mit Wellenlängen zwischen etwa 600 nm und 2000 nm sind typische Abstände von zwei Lagen kleiner als 200 nm bis 400 nm. Für Frequenzen im Gigahertzbereich werden dagegen Abstände in der Größenordnung von 50 $\mu m$ bis 100 $\mu m$ verwendet.

Durch Anpassen der Strukturparameter ist das Aufbauprinzip des hier vorgestellten Metamaterials daher sowohl für den GHz-Bereich mit Wellenlängen um 3 mm als auch für den THz-Bereich mit Wellenlängen zwischen ca. 600 nm und ca. 2000 nm verwendbar.

Bei der dargestellten Ausrichtung des Metamaterials relativ zur Welle 18 ist der Akzeptanzwinkel für einfallende Strahlung sehr groß, da das H-Feld bei Polarisation in y-Richtung bei jedem Einfallswinkel immer mit voller Amplitude wirkt und das elektrische Feld nur mit dem Kosinus des Einfallwinkels $\Theta$ abnimmt. Bei dieser Ausrichtung ergibt sich also ein weiter Akzeptanzwinkel, der eine Realisierung von optischen Elementen mit nahezu beliebiger Form oder Geometrie zulässt. Außerdem tritt keine wesentliche Beschränkung des Materials durch den Grenzwinkel der Totalreflexion des dielektrischen Trägermaterials auf.

Das Metamaterial oder ein daraus hergestelltes optisches Element wird daher bevorzugt in dieser Ausrichtung verwendet, bei der eine magnetische Feldstärke einer einfallenden elektromagnetischen Welle quer zu den zweiten Abschnitten liegt und eine elektrische Feldstärke der einfallenden Welle eine quer zu den ersten Abschnitten liegende Komponente besitzt.

Damit wird ein neues Breitband-Metamaterial vorgestellt, das im optischen Bereich des elektromagnetischen Spektrums linkshändige Eigenschaften aufweist und einen großen Winkelbereich einfallender elektromagnetischer Strahlung zulässt. Das Breitband-Metamaterial weist integrierte Metallisierungen mit Strukturgrößen weit unterhalb der Wellenlänge von sichtbarem Licht auf. Die Metallisierungen erfüllen gemäß dem Prinzip des äquivalenten Schaltkreises eine elektromagnetische Funktion so, dass das Metamaterial simultan eine negative Permittivität $\varepsilon$ und eine negative Permeabilität $\mu$ ab der Frequenz 0 bis zu einer bestimmten oberen Grenzfrequenz besitzt. Die oberen Grenzfrequenzen $\omega_{se}$, $\omega_{sh}$ (se = Serie; sh = shunt) ergeben sich aus einem Anteil einer kapazitiven Serienschlussimpedanz in Verbindung mit einem Anteil einer induktiven Serienschlussimpedanz oder einem Anteil der induktiven Nebenschlussimpedanz in Verbindung mit einer kapazitiven Nebenschlussimpedanz an der Impedanz der Gesamtstruktur zu $\omega_{se}$ =1/ $(_{Lse} C_{se})^{1/2}$ bzw. $\omega_{sh}$ = 1/ $(L_{sh} C_{sh})^{1/2}$. Dabei ist $\omega_{se}$ < $\omega_{sh}$. Trägt man den von $\omega_{se}$ und $\omega_{sh}$ abhängigen Brechungsindex des Metamaterials über der Frequenz $\omega$ auf, ergeben sich drei Bereiche.

Für niedrige Frequenzen $\omega$ < $\omega_{se}$ ist sowohl $\varepsilon$ als auch $\mu$ negativ, so dass sich die erwünschten linkshändigen Eigenschaften ergeben.

Für mittlere Frequenzen $\omega_{se}$ < $\omega$ < $\omega_{sh}$ ist nur noch $\varepsilon$ negativ und $\mu$ positiv; hier ergibt sich ein Bereich gedämpfter Wellenausbreitung (slow photons).

Für hohe Frequenzen $\omega$ > $\omega_{sh}$ ist sowohl $\varepsilon$ als auch $\mu$ positiv, so dass sich rechtshändige Eigenschaften ergeben.

Mit einer Ausgestaltung eines erfindungsgemäßen Metamaterials haben sich zum Beispiel Werte von ca. 180 THz für $\omega_{se}$ und ca. 340 THz für $\omega_{sh}$ ergeben. Es ist ein besonderer Vorteil des erfindungsgemäßen Metamaterials, dass sich der Frequenzbereich linkshändiger Wellenausbreitung durch Veränderung der kapazitiven und induktiven Beiträge einer Mikrozelle separat einstellen lässt.

Da die Serienkapazität mit einer parallel zur Serienkapazität liegenden parasitären Serieninduktivität (Serie = in k-Richtung) einhergeht, ergibt sich bei vergleichsweise niedrigen Frequenzen wieder ein rechtshändiges Verhalten. Im Ergebnis zeigt sich daher die erwünschte linkshändige Wellenausbreitung über eine gewisse Bandbreite. Diese Bandbreite ist größer als die an Resonanzbandbreiten gekoppelte linkshändige Wellenausbreitung bekannter resonanter Strukturen, wie sie zum Beispiel durch die eingangs genannte Veröffentlichung von Chen et al bekannt sind. Die Bandbreite des erfindungsgemäßen Metamaterials kann durch Einfügen eines zusätzlichen induktiven Gitters, wie es in der Fig. 2b gezeigt ist, weiter vergrößert werden.

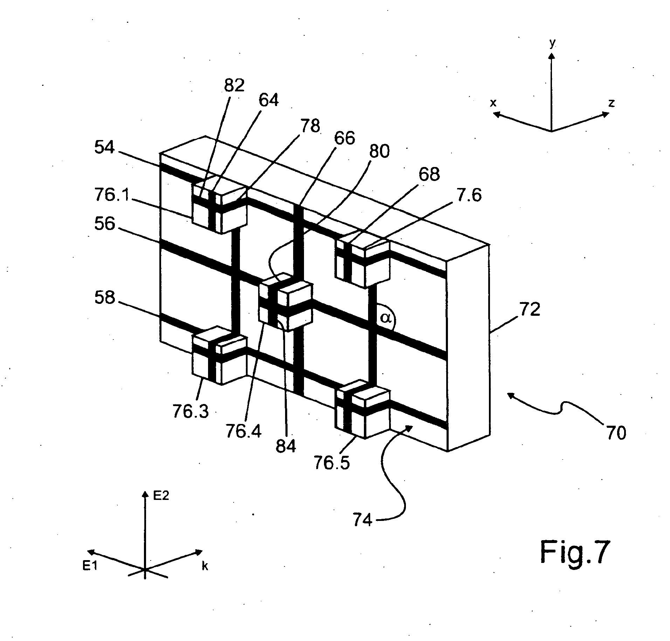

Fig. 7 zeigt eine Ausgestaltung einer Mesa-Meanderstruktur mit waagerecht verlaufenden ersten Meanderbändern 54, 56, 58 und weiteren Meanderbändern 64, 66, 68, die in einem Winkel $\alpha$, bevorzugt einem rechten Winkel zu den ersten Meanderbändern 54, 56, 58 auf einer Teilebene 70 angeordnet sind. Die Teilebene 70 weist wie die Teilebene 46 aus der Fig. 4 eine Schicht aus dielektrischem Trägermaterial 72 auf, das für elektromagnetische Wellen durchlässig ist und eine möglichst niedrige Brechzahl besitzen soll. Eine Fläche 74 der Teilebene 70 wird so vorstrukturiert, dass sie positive oder negative Mesa-Strukturen 76.1, 76.2, ..., 76.5 aufweist. Dabei werden Erhebungen über der Fläche 74 als positiv und Vertiefungen in der Fläche 74 als negativ verstanden. Sowohl bei den positiven als auch bei den negativen Strukturen können verschiedene Verhältnisse von Länge zu Breite von Nutzen sein. Für die Abstände gelten die Ausführungen zu den Figuren 4, 5 und 6 analog. Für die Dimensionen der Mesa-Strukturen 76.1, 76.2, ..., 76.5 gelten die Ausführungen zu der Fig. 1 analog.

Anschließend werden auf der vorstrukturierten Fläche 74 die leitfähigen Meanderbänder 54, 56, 58 und 64, 66, 68 gebildet, wie es im Zusammenhang mit der Fig. 4 beschrieben wurde.

Die ersten Meanderbänder 54, 56, 58 weisen erste Abschnitte 78 auf, die in z-Richtung angeordnet sind. Diese ersten Abschnitte bilden einen ersten Teil der ersten Abschnitte. Die zweiten Meanderbänder 64, 66, 68 weisen ebenfalls erste Abschnitte 80 auf, die in z-Richtung angeordnet sind. Diese ersten Abschnitte bilden einen zweiten Teil der ersten Abschnitte.

Ferner weisen die ersten Meanderbänder 54, 56, 58 zweite Abschnitte 82 auf, die in x-Richtung angeordnet sind, und die einen ersten Teil der zweiten Abschnitte bilden. Die zweiten Meanderbänder 64, 66, 68 weisen zweite Abschnitte 84 auf, die in y-Richtung angeordnet sind. Diese zweiten Abschnitte 84 bilden einen zweiten Teil der zweiten Abschnitte.

Damit wird ein Metamaterial bereitgestellt, bei dem der erste Teil 78 der ersten Abschnitte angeordnet ist, dass die ersten Abschnitte 78 des ersten Teils bei einer Beleuchtung mit einer elektromagnetischen Welle bestimmter Ausbreitungsrichtung k und einer ersten Polarisationsrichtung E1 kapazitive Serienimpedanzen bilden, während der erste Teil der zweiten Abschnitte 82 so angeordnet ist, dass die zweiten Abschnitte 82 bei dieser Beleuchtung mit der Polarisation E1 induktive Nebenschlussimpedanzen bilden.

Ferner ist der zweite Teil 80 der ersten Abschnitte und der zweite Teil 84 der zweiten Abschnitte so angeordnet, dass die ersten Abschnitte des zweiten Teils 80 der ersten Abschnitte bei einer Beleuchtung mit einer elektromagnetischen Welle bestimmter Ausbreitungsrichtung k und einer zweiten Polarisationsrichtung E2 kapazitive Serienimpedanzen bilden, während die zweiten Abschnitte des zweiten Teils 84 der zweiten Abschnitte so angeordnet sind, dass sie bei der Beleuchtung induktive Nebenschlussimpedanzen bilden.

Der Vorteil dieser Ausgestaltung besteht darin, dass sie zusätzlich zu allen anderen Vorteilen der in dieser Anmeldung dargestellten Ausgestaltungen eine weitgehende Unabhängigkeit von der Polarisation der einfallenden Welle besitzt. Dabei muss die Welle keine zu den ersten Meanderbändern oder den zweiten Meanderbändern parallele lineare Polarisation aufweisen. Die Polarisationsrichtung kann allgemein in der durch E1 und E2 aufgespannten Ebene liegen. Als Folge arbeitet die Ausgestaltung der Fig. 7 zum Beispiel auch mit zirkular polarisiertem Licht. Als weiterer Vorteil hat sich eine weitere Erhöhung der Bandbreite, über die eine linkshändige Wellenausbreitung stattfindet, gezeigt.

Die gekreuzte Anordnung der ersten Meanderbänder 54, 56, 58 und der zweiten Meanderbänder 64, 66, 68 kann auch durch Übereinanderstapeln von Schichten aus planarisierten Teilebenen 46 aus Fig. 4 erzeugt werden, wobei zwei benachbarte Teilebenen 46 um den Winkel $\alpha$ verdreht zueinander angeordnet werden. Ferner kann die gekreuzte Anordnung mit oder ohne eine dielektrische Zwischenlage zwischen den ersten Meanderbändern 54, 56, 58 und den zweiten Meanderbändern 64, 66, 68 erzeugt werden.

Für jede der oben beschriebenen Ausgestaltungen gilt ferner, dass die Meanderbänder nicht geradlinig verlaufen müssen sondern auch einen gekrümmten Verlauf aufweisen können, um eine Einkopplung der Welle in das Metamaterial zu verbessern. Es versteht sich ferner, dass ein Negativ der dargestellten Strukturen, also eine Struktur mit vertauschter Anordnung der leitfähigen Meanderbänder und der dielektrischen Strukturen, nach dem Babinet'schen Theorem ebenfalls ein Metamaterial mit vergleichbaren Eigenschaften darstellt.

Weitere vorteilhafte Ausgestaltungen des Metamaterials zeichnen sich durch linienhafte Strukturen 32.1, 34.1, 36.1, 38.1 als erste Abschnitte und zweite Abschnitte aus. Eine alternativ bevorzugte Ausgestaltung des Metamaterials weist flächenhafte Strukturen 32.2, 34.2, 36.2, 38.2 als erste Abschnitte und als zweite Abschnitte auf.

Eine vorteilhafte Ausgestaltung des mehrere Teilebenen 46 aufweisenden Metamaterials zeichnet sich dadurch aus, dass es drei bis zehn der Teilebenen aufweist.

Ein weiterer Aspekt der Erfindung besteht darin, dass sich das hier vorgestellte Metamaterial zur Herstellung optischer Elemente eignet. Ein erfindungsgemäßes optisches Element mit beliebiger Geometrie zeichnet sich dadurch aus, dass es ein Metamaterial nach einem der Ansprüche 1 bis 9 aufweist.

Ein bevorzugte Ausgestaltung eines solchen optischen Elements zeichnet sich durch ein Metamaterial mit den Merkmalen des Anspruchs 5 aus, dessen erste Abschnitte und zweite Abschnitte so dimensioniert sind, dass ein Verhältnis einer Permeabilität $\mu$ und einer Permittivität $\varepsilon$ des Metamaterials gleich Eins ist.

Eine bevorzugte Verwendung eines Metamaterials nach einem der Ansprüche 1 bis 9 dient zur Leitung elektromagnetischer Wellen, wobei das Metamaterial mit angepassten Strukturparametern in einem breiten Frequenzbereich, der vom GHz-Frequenzbereich bis in den THz-Frequenzbereich reicht, verwendet wird.

## Patentansprüche

1. Metamaterial mit negativem Brechungsindex und mit der Fähigkeit zur linkshändigen Leitung elektromagnetischer Wellen, deren Frequenzen innerhalb einer von Strukturparametern des Metamaterials abhängigen Bandbreite liegen, welches Metamaterial ein dielektrisches Trägermaterial (12; 48), erste elektrisch leitfähige Abschnitte (14.1, 14.2, 14.3, 14.4) und zweite elektrisch leitfähige Abschnitte (16.1, 16.2) aufweist, wobei die ersten Abschnitte so angeordnet sind, dass sie bei einer Beleuchtung mit einer elektromagnetischen Welle, deren Propagationsvektor parallel zu den ersten Abschnitten liegt, kapazitive Serienschlussimpedanzen bilden und dass die zweiten Abschnitte so angeordnet sind, dass sie bei einer Beleuchtung mit der elektromagnetischen Welle senkrecht zu deren Propagationsvektor liegen und induktive Nebenschlussimpedanzen bilden, **dadurch gekennzeichnet, dass** das dielektrische Trägermaterial (12; 48) als aus einem Stück bestehendes Volumen realisiert ist, das wenigstens eine innere Fläche (50) aufweist, die durch positive oder negative Rippen- oder Mesa-Strukturen (52.1, 52.2) im dielektrischen Trägermaterial (48) nicht-planar vorstrukturiert ist und die mit den ersten Abschnitten (14.1, 14.2, 14.3, 14.4) und zweiten Abschnitten (16.1, 16.2) belegt ist, wobei die ersten Abschnitte und die zweiten Abschnitte linienhafte oder flächenhafte Teilabschnitte einer auf den positiven oder negativen Rippen- oder Mesa-Strukturen (52.1, 52.2) liegenden Struktur (54, 56, 58) aus leitfähigem Material bilden, so dass die ersten und die zweiten Abschnitte in allen drei Dimensionen in das aus einem Stück bestehende dielektrische Trägermaterial eingebettet sind.

2. Metamaterial nach Anspruch 1, **dadurch gekennzeichnet, dass** auf positiven oder negativen Rippen- oder Mesa-Strukturen (52.1, 52.2) mehrere Strukturen (54, 56, 58) aus leitfähigem Material parallel zueinander angeordnet sind.

3. Metamaterial nach Anspruch 2, **dadurch gekennzeichnet, dass** es mehrere Teilebenen (46) aufweist, wobei jede Teilebene (46) eine Schicht des dielektrischen Trägermaterials (48) mit einer inneren Fläche (50) und erste Abschnitte und zweite Abschnitte aufweist.

4. Metamaterial nach Anspruch 3, **dadurch gekennzeichnet, dass** ein Abstand zwischen positiven oder negativen Rippen- oder Mesa-Strukturen (52.1, 52.2) in einer Teilebene sowie ein Abstand von zwei Teilebenen 200 nm bis 400 nm beträgt.

5. Metamaterial nach Anspruch 3, **dadurch gekennzeichnet, dass** ein Abstand zwischen positiven oder negativen Rippen- oder Mesa-Strukturen (52.1, 52.2) in einer Teilebene sowie ein Abstand von zwei Teilebenen 50 $\mu m$ bis 100 $\mu m$ beträgt.

6. Metamaterial nach Anspruch 3, **dadurch gekennzeichnet, dass** ein Abstand zwischen positiven oder negativen Rippen- oder Mesa-Strukturen (52.1, 52.2) in einer Teilebene sowie ein Abstand von zwei Teilebenen ein Zehntel bis ein Fünftel der Wellenlänge der einfallenden Welle beträgt.

7. Metamaterial nach einem der vorhergehenden Ansprüche, **dadurch gekennzeichnet, dass** eine Tiefe (d_z) der Rippen- oder Mesastrukturen kleiner als ¼ einer Arbeitswellenlänge des Metamaterials ist.

8. Metamaterial nach einem der vorhergehenden Ansprüche, **dadurch gekennzeichnet, dass** ein erster Teil (78) der ersten Abschnitte und ein erster Teil (82) der zweiten Abschnitte so angeordnet ist, dass die ersten Abschnitte des ersten Teils (78) bei einer Beleuchtung mit einer elektromagnetischen Welle bestimmter Ausbreitungsrichtung (k)

und einer ersten Polarisationsrichtung (E1) kapazitive Serienimpedanzen bilden, während die zweiten Abschnitte des ersten Teils (82) der zweiten Abschnitte so angeordnet sind, dass sie bei der Beleuchtung induktive Nebenschlussimpedanzen bilden, und dass ein zweiter Teil (80) der ersten Abschnitte und ein zweiter Teil (84) der zweiten Abschnitte so angeordnet ist, dass die ersten Abschnitte des zweiten Teils (80) der ersten Abschnitte bei einer Beleuchtung mit einer elektromagnetischen Welle bestimmter Ausbreitungsrichtung und einer zweiten Polarisationsrichtung (E2) kapazitive Serienimpedanzen bilden, während die zweiten Abschnitte des zweiten Teils (84) der zweiten Abschnitte so angeordnet sind, dass sie bei der Beleuchtung induktive Nebenschlussimpedanzen bilden.

9. Verwendung eines Metamaterials nach einem der Ansprüche 1 bis 8, **dadurch gekennzeichnet, dass** sie mit einer Ausrichtung des Metamaterials erfolgt, bei der eine magnetische Feldstärke (H) einer einfallenden elektromagnetischen Welle (18) quer zu den zweiten Abschnitten liegt und eine elektrische Feldstärke (E) der einfallenden Welle (18) eine quer zu den ersten Abschnitten liegende Komponente besitzt.

10. Verfahren zur Herstellung eines Metamaterials mit der Fähigkeit zur linkshändigen Leitung elektromagnetischer Wellen, deren Frequenzen innerhalb einer von Strukturparametern des Metamaterials abhängigen Bandbreite liegen, welches Metamaterial ein dielektrisches Trägermaterial (12; 48), erste elektrisch leitfähige Abschnitte (14.1, 14.2. 14.3, 14.4) und zweite elektrisch leitfähige Abschnitte (16.1, 16.2) aufweist, wobei die ersten Abschnitte so angeordnet sind, dass sie bei einer Beleuchtung mit einer elektromagnetischen Welle, deren Propagationsvektor parallel zu den ersten Abschnitten liegt, kapazitive Serienschlussimpedanzen bilden und dass die zweiten Abschnitte so angeordnet sind, dass sie bei einer Beleuchtung mit der elektromagnetischen Welle senkrecht zu deren Propagationsvektor liegen und induktive Nebenschlussimpedanzen bilden, **dadurch gekennzeichnet, dass** das dielektrische Trägermaterial (12; 48) als aus einem Stück bestehendes Volumen realisiert wird, in dem wenigstens eine innere Fläche (50) durch positive oder negative Rippen- oder Mesa-Strukturen (52.1, 52.2) nicht-planar vorstrukturiert und mit ersten Abschnitten (14.1, 14.2, 14.3, 14.4) und zweiten Abschnitten (16.1, 16.2) so belegt wird, wobei die ersten Abschnitte und die zweiten Abschnitte linienhafte oder flächenhafte Teilabschnitte einer auf den positiven oder negativen Rippen- oder Mesa-Strukturen (52.1, 52.2) liegenden Struktur (54, 56, 58) aus leitfähigen Material bilden, so dass die ersten und die zweiten Abschnitte in allen drei Dimensionen in das aus einem Stück bestehende dielektrische Trägermaterial eingebettet werden.

11. verfahren nach Anspruch 10, **dadurch gekennzeichnet, dass** eine Schicht aus dielektrischem Trägermaterial (48) erzeugt wird, die Schicht so vorstrukturiert wird, dass eine Oberfläche (50) der Schicht nicht planare positive oder negative Rippen- oder Mesa-Strukturen aufweist, die Oberfläche (50) mit Meanderbändern (54, 56, 58) aus leitfähigem Material belegt wird, und die entstandene Struktur mit weiterem dielektrischen Trägermaterial bedeckt und anschließend planarisiert wird.

12. Verfahren nach Anspruch 11 **dadurch gekennzeichnet, dass** das planarisierte Trägermaterial als vorzustrukturierende Schicht verwendet wird.

13. Verfahren nach Anspruch 12, **dadurch gekennzeichnet, dass** es für eine Herstellung eines Metamaterials mit einer Mehrzahl von Lagen der leitfähigen Streifen mehrmals wiederholt wird, wobei jeweils planarisiertes Metamaterial mit einem n Lagen leitfähiger Streifen aufweisenden Schichtstapel als vorzustrukturierende Schicht zur Erzeugung eines Schichtstapels mit n + 1 Lagen leitfähiger Schichten verwendet wird.

14. Verfahren zur Herstellung eines Metamaterials nach einem der Ansprüche 10 bis 13, **dadurch gekennzeichnet, dass** die ersten elektrisch leitfähigen Abschnitte (14.1, 14.2. 14.3, 14.4) und zweiten elektrisch leitfähigen Abschnitte (16.1, 16.2) mittels eines galvanischen Verfahrens hergestellt werden.

**Claims**

1. Meta material having a negative refractive index and having the capability of left-handed-conduction of electromagnetic waves having frequencies within a bandwidth that depends on structure parameters of the meta material, which meta material comprises a dielectric carrier material (12; 48), first electrically conductive sections (14.1, 14.2, 14.3, 14.4) and second electrically conductive sections (16.1, 16.2), wherein the first sections are arranged such that they form capacitive serial impedances upon illumination with an electromagnetic wave having a propagation vector parallel to the first sections and wherein the second sections are arranged perpendicular to said propagation vector upon illumination with said electromagnetic wave, **characterized in that** the dielectric carrier material (12; 48) is realized as a volume consisting of one piece comprising at least one inner area (50) that is pre-structured in a non-planar fashion by positive or negative fin- or mesa-structures (52.1, 52.2) in the dielectric carrier material (48) and which is covered said with first sections (14.1, 14.2, 14.3, 14.4) and second sections (16.1, 16.2), wherein the first sections and the second sections form line-like or plane-like partial sections of structures (54, 56, 58) made of a conductive material and being disposed on the positive or negative fin- or mesa-structures (52.1, 52.2) such that the first and the second sections are embedded in the carrier material that consists of one piece in all three dimensions.

2. Meta material according to claim 1, **characterized in that** several structures (54, 56, 58) of conductive material are arranged parallel to each other on positive or negative fin- or mesa-structures (52.1, 52.2).

3. Meta material according to claim 2, **characterized by** comprising several partial planes (46), with each partial plane (46) comprising a layer of the dielectric carrier material (48) with an inner area (50) and first and second sections.

4. Meta material according to claim 3, **characterized in that** a distance between positive or negative fin- or mesa-structures (52.1, 52.2) in one partial plain as well as a distance between two partial planes is 200 nm to 400 nm.

5. Meta material according to claim 3, **characterized in that** a distance between positive or negative fin- or mesa-structures (52.1, 52.2) in one partial plane as well as a distance between two partial planes is 50 $\mu$m to 100 $\mu$m.

6. Meta material according to claim 3, **characterized in that** a distance between positive or negative fin- or mesa-structures (52.1, 52.2) in one partial plane as well as a distance between two partial planes is one tenth to one fifth of the wavelength of the incident wave.

7. Meta material according to any of the preceding claims, **characterized in that** a depth (d_z) of the fin- or mesa-structures is less than a quarter of an effective wavelength of the meta material.

8. Meta material according to any of the preceding claims, **characterized in that** a first part (78) of the first sections and a first part (82) of the second sections are arranged such that the first sections of the first part (78) form capacitive serial impedances when illuminated with an electromagnetic wave of a specific direction of propagation (k) and a first direction of polarization (E1), while the second sections of the first part (82) of the second sections are arranged such that they form inductive shunt impedances upon illumination, and that a second part (80) of the first sections and a second part (84) of the second sections are arranged such that the first sections of the second part (80) of the first sections form capacitive serial impedances, when illuminated with and electromagnetic wave of a specific direction of propagation and a second direction of polarization (E2, while the second sections of the second part (84) of the second sections are arranged such that they form inductive shunt impedances upon the illumination.

9. Use of a meta material according to any of claims 1 to 8, **characterized in that** the use is made with an orientation of the meta material at which a magnetic field strength (H) of an incident electromagnetic wave (18) is positioned crosswise to the second sections and an electrical field strength (E) of the incident wave (18) has a component that extends crosswise to the first sections.

10. Method for producing a meta material having the capability of left-handed conduction of electromagnetic waves having frequencies within a bandwidth that depends on structure parameters of the meta material, which meta material comprises a dielectric carrier material (12; 48), first electrically conductive sections (14.1, 14.2, 14.3, 14.4) and second electrically conductive sections (16.1, 16.2), wherein the first sections are arranged such that they form capacitive serial impedances upon illumination with an electromagnetic wave having a propagation vector parallel to the first sections and wherein the second sections are arranged perpendicular to said propagation vector and form inductive shunt impedances upon an illumination with said electromagnetic wave, **characterized in that** the dielectric carrier material (12; 48) is realized as a volume consisting of one piece comprising at least one inner area (50) that is pre-structured in a non-planar fashion by positive or negative fin- or mesa-structures (52.1, 52.2) and which is covered with said first sections (14.1, 14.2, 14.3, 14.4) and second sections (16.1, 16.2) wherein the first sections and the second sections form line-like or plane-like partial sections of a structure (54, 56, 58) made of a conductive material and being disposed on the positive or negative fin- or mesa-structures (52.1, 52.2) such that the first and the second sections are embedded in all three dimensions in the carrier material that consists of one piece.

11. Method of claim 10, **characterized in that** a layer is produced of a dielectric carrier material (48), the layer is pre-structured such that a surface (50) of a layer comprises a non-planar positive or negative fin- or mesa-structure, the surface (50) is covered with meander strips (54, 56, 58) made of a conductive material and **in that** the formed structure is covered with additional dielectric carrier material and thereafter is planished.

**12.** The method of claim 11, **characterized in that** the planished carrier material is used as a layer to be pre-structured.

**13.** The method of claim 12, **characterized in that** said method is repeated several times for a production for a meta material with a multitude of layers of conducting strips, whereby a planished meta material with a stack of layers comprising n layers of conductive strips is used as a layer to be pre-structured for producing a stack of layers with n+1 layers of conductive strips.

**14.** A method of producing a meta material according to any of the claims 10 to 13, **characterized in that** the first electrically conductive sections (14.1, 14.2, 14.3, 14.4) and second electrically conductive sections (16.1, 16.2) are produced using a galvanic method.

**Revendications**

**1.** Métamatériau présentant un indice de réfraction négatif et ayant la capacité de conduire sur la gauche des ondes électromagnétiques dont les fréquences se situent à l'intérieur d'une largeur de bande dépendant des paramètres de structure du métamatériau, ledit matériau présentant un matériau de support diélectrique (12; 48), des premiers segments électroconducteurs (14.1, 14.2, 14.3, 14.4) et des seconds segments électroconducteurs (16.1, 16.2), les premiers segments étant disposés de sorte qu'ils forment, en cas d'éclairage avec une onde électromagnétique dont le vecteur de propagation se situe parallèlement aux premiers segments, des impédances de fermeture série capacitives et les seconds segments sont disposés de sorte qu'en cas d'éclairage avec l'onde électromagnétique, ils se situent perpendiculairement au vecteur de propagation de ladite onde et forment des impédances de fermeture auxiliaires inductives, **caractérisé en ce que** le matériau de support diélectrique (12; 48) est réalisé sous forme de volume d'un seul tenant, comportant au moins une surface interne (50) préalablement structurée de façon non plane par des structures à crêtes ou mesa positives ou négatives (52.1, 52.2) dans le matériau de support diélectrique (48) et garnie des premiers segments (14.1, 14.2, 14.3, 14.4) et des seconds segments (16.1, 16.2), les premiers segments et les seconds segments formant des segments partiels linéaires ou plans d'une structure (54, 56, 58) en matériau conducteur située sur les structures à crêtes ou mesa positives ou négatives (51.1, 52.2), de sorte que les premiers segments et les seconds segments soient insérés dans l'ensemble des trois dimensions dans le matériau de support diélectrique d'un seul tenant.

**2.** Métamatériau selon la revendication 1, **caractérisé en ce que** plusieurs structures (54, 56, 58) en matériau conducteur sont disposées parallèlement les unes aux autres sur des structures à crêtes ou mesa positives ou négatives (52.1, 52.2).

**3.** Métamatériau selon la revendication 2, **caractérisé en ce qu'**il comprend plusieurs plans partiels (46), chaque plan partiel (46) comprenant une couche du matériau de support diélectrique (48) doté d'une surface intérieure (50) et des premiers segments et des seconds segments.

**4.** Métamatériau selon la revendication 3, **caractérisé en ce qu'**un écart entre les structures à crête ou mesa positives ou négatives (52.1, 52.2) dans un plan partiel et un écart entre deux plans partiels atteignent 200 nm à 400 nm.

**5.** Métamatériau selon la revendication 3, **caractérisé en ce qu'**un écart entre les structures à crête ou mesa positives ou négatives (52.1, 52.2) dans un plan partiel et un écart entre deux plans partiels atteignent 50 $\mu$m à 100 $\mu$m.

**6.** Métamatériau selon la revendication 3, **caractérisé en ce qu'**un écart entre les structures à crêtes ou mesa positives ou négatives (52.1, 52.2) dans un plan partiel et un écart entre deux plans partiels atteignent un dixième à un cinquième de la longueur d'onde de l'onde incidente.

**7.** Métamatériau selon l'une quelconque des revendications précédentes, **caractérisé en ce qu'**une profondeur ($d\_z$) des structures à crêtes ou mesa est inférieure à 1/4 d'une longueur d'onde de travail du métamatériau.

**8.** Métamatériau selon l'une quelconque des revendications précédentes, **caractérisé en ce qu'**une première partie (78) des premiers segments et une première partie (82) des seconds segments sont disposées de sorte que les premiers segments de la première partie (78), en cas d'éclairage avec une onde électromagnétique d'une direction de propagation (k) définie et d'une première direction de polarisation (E1), forment des impédances série capacitives, tandis que les seconds segments de la première partie (82) des seconds segments sont disposés de sorte qu'en cas d'éclairage, ils forment des impédances de fermeture auxiliaires inductives, et **en ce qu'**une seconde partie (80) des premiers segments et une seconde partie (84) des seconds segments sont disposées de sorte que les premiers segments de la seconde partie (80) des premiers segments, en cas d'éclairage avec une onde électromagnétique d'une direction de propagation définie et d'une seconde direction de polarisation (E2) forment des impédances série capacitives, tandis que les seconds segments de la seconde partie (84) des seconds segments sont disposés de sorte qu'ils forment en cas d'éclairage des impédances de fermeture auxiliaires inductives.

9.  Utilisation d'un métamatériau selon l'une quelconque des revendications 1 à 8, **caractérisée en ce qu'**elle s'effectue avec une orientation du métamatériau selon laquelle une intensité de champ magnétique (H) d'une onde électromagnétique (18) incidente se situe transversalement aux seconds segments et une intensité de champ électrique (E) de l'onde (18) incidente possède une composante située transversalement aux premiers segments.

10. Procédé de fabrication d'un métamatériau ayant la capacité de conduire sur la gauche des ondes électromagnétiques dont les fréquences se situent à l'intérieur d'une largeur de bande dépendant des paramètres de structure du métamatériau, ledit matériau présentant un matériau de support diélectrique (12; 48), des premiers segments électroconducteurs (14.1, 14.2, 14.3, 14.4) et des seconds segments électroconducteurs (16.1, 16.2), les premiers segments étant disposés de sorte qu'en cas d'éclairage avec une onde électromagnétique dont le vecteur de propagation se situe parallèlement aux premiers segments, ils forment des impédances de fermeture série capacitives et de sorte qu'en cas d'éclairage avec l'onde électromagnétique, ils se situent perpendiculairement au vecteur de propagation de ladite onde et forment des impédances de fermeture auxiliaires inductives, **caractérisé en ce que** le matériau de support diélectrique (12; 48) est réalisé sous forme de volume d'un seul tenant, dans lequel au moins une surface interne (50) est préalablement structurée de façon non plane par des structures à crêtes ou mesa positives ou négatives (52.1, 52.2) et garnie des premiers segments (14.1, 14.2, 14.3, 14.4) et des seconds segments (16.1, 16.2), les premiers segments et les seconds segments formant des segments partiels linéaires ou plans d'une structure (54, 56, 58) en matériau conducteur située sur les structures à crêtes ou mesa positives ou négatives (51.1, 52.2), de sorte que les premiers et les seconds segments soient insérés dans l'ensemble des trois dimensions dans le matériau de support diélectrique d'un seul tenant.

11. Procédé selon la revendication 10, **caractérisé en ce qu'**une couche est produite à partir du matériau de support diélectrique (48), la couche est préalablement structurée de sorte qu'une surface (50) de la couche présente des structures à crête ou mesa positives ou négatives non planes, la surface (50) est garnie de bandes sinueuses (54, 56, 58) en matériau conducteur, et la structure obtenue est recouverte d'un autre matériau de support diélectrique puis planarisée.

12. Procédé selon la revendication 11, **caractérisé en ce que** le matériau de support planarisé est utilisé comme une couche à structurer préalablement.

13. Procédé selon la revendication 12, **caractérisé en ce qu'**il est répété à plusieurs reprises pour une fabrication d'un métamatériau avec une pluralité de couches des bandes conductrices, le métamatériau respectivement planarisé étant utilisé avec un empilement de couches comprenant n couches de bandes conductrices comme couche à structurer préalablement pour produire un empilement de couches comprenant n+1 couches de couches conductrices.

14. Procédé de fabrication d'un métamatériau selon l'une quelconque des revendications 10 à 13, **caractérisé en ce que** les premiers segments électroconducteurs (14.1, 14.2, 14.3, 14.4) et les seconds segments électroconducteurs (16.1, 16.2) sont fabriqués au moyen d'un procédé galvanique.

Fig.1

Fig.2

a)

30    32.1

34.1

36.1

38.1

18

H

k

E

b)

40    32.2

34.2

36.2

38.2

18

H

k

E

c)

18

H

E    k

42

32.3    34.3

36.3

38.3

44

32.4    34.4

36.4

38.4

Fig.3

Fig.4

Fig.5

Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **CHEN et al.** Metamaterial exhibiting left-handed properties over multiple frequency bands. *Journal of Applied Physics,* vol. 96
- **SHELBY et al.** Experimental verification of a negative index of refraction. *Science,* 06. April 2001, vol. 292 (5514), 77-79
- **CALOZ et al.** Transmission Line Approach of Left-Handed (LH) Materials and Microstrip Implementation of an Artificial LH Transmission Line. *IEEE Transactions on Antennas and Propagation,* vol. 52 (5
- **PENDRY et al.** Magnetism from Conductors and Enhanced Nonlinear Phenomena. *IEEE Transactions on Microwave Theory and Techniques,* November 1999, vol. 47 (11
- **LINDEN et al.** Magnetic Response of Metamaterials at 100 Terahertz. *Science,* vol. 306, 1351-1353
- **N. MARCUVITZ.** M.I.T. Rad. Lab. Ser. Mc Graw-Hill
- **R. ULRICH.** *Infrared Physics,* 1967, vol. 7, 37